# EUROPEAN PATENT APPLICATION

(11) **EP 2 237 508 A1**
(43) Date of publication of application: **06.10.2010**
(21) Application number: 08871335.9
(22) Date of filing: 29.12.2008
(51) Int. Cl.: H04L 12/64

(54) **METHOD, SYSTEM AND DEVICE FOR REALIZING SIGNAL PAUSE**

(30) Priority: 29.12.2007 CN 200710306084
(71) Applicant: Huawei Technologies Co., Ltd., Longgang District, Shenzhen Guangdong 518129 (CN)
(72) Inventor: LIN, Yangbo, Shenzhen Guangdong 518129 (CN)
(74) Representative: Barth, Stephan Manuel
(86) International application number: PCT/CN2008/073837
(87) International publication number: WO 2009/092271

(57) **Abstract**

A method for pausing signals includes the following steps: A media gateway (MG) receives a pause instruction, from a media gateway controller (MGC), instructing the MG to pause a resource operation; and the MG pauses the resource operation according to the pause instruction. A device for pausing signals is also provided. In embodiments of the present invention, the MGC may flexibly pause a signal or a signal list on a termination or a stream or associated with a media resource.

## Description

This application claims priority to Chinese Patent Application No. 200710306084.1, filed with the Chinese Patent Office on December 29, 2007 and entitled "Method, System, and Device for Pausing Signals", which is incorporated herein by reference in its entirety.

### Field of the Invention

The present invention relates to the field of communications technologies, and in particular, to a method, system, and device for pausing signals.

### Background of the Invention

The media gateway controller (MGC) and the media gateway (MG) are two key components on a packet network where services are separated from bearers. The MGC is responsible for service control, and the MG is responsible for media bearing, so that the service control plane is separated from the media bearer plane. Thus, the network resources can be better shared, the equipment upgrade and service expansion are simplified, and thus the development and maintenance costs are reduced.

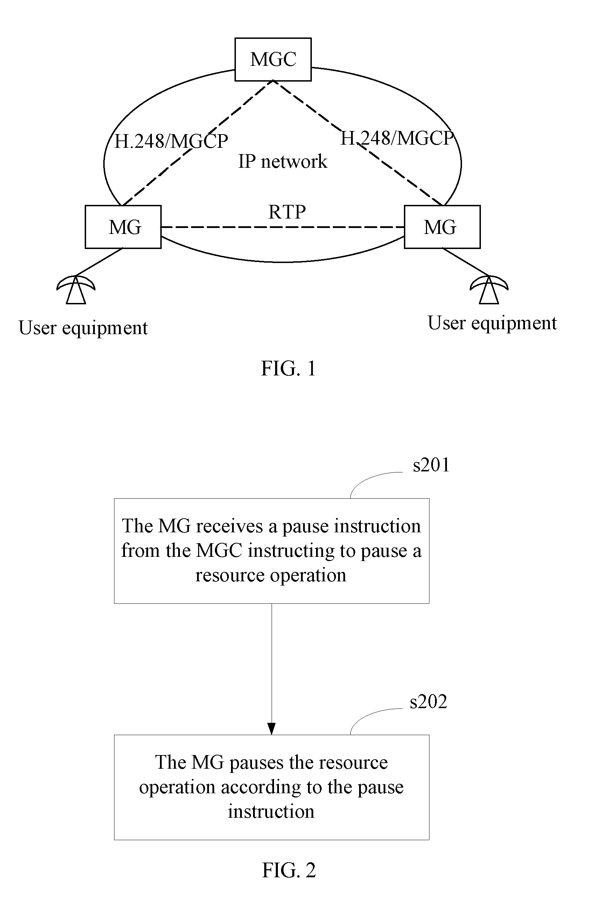

FIG. 1 illustrates the networking of an MGC and an MG. The MG communicates with the MGC over (media) gateway control protocols. At present, the widely used protocols include the Media Gateway Control Protocol (MGCP) and the MGCP-based Gateway Control Protocol (H.248/ MeGaCo). Taking H.248 as an example, various resources on the MG are abstractly represented by terminations. The terminations are categorized into physical terminations and ephemeral terminations. Physical terminations represent some physical entities having a semi-existence, for example, a time division multiplexing (TDM) timeslot. Ephemeral terminations represent some public resources requested ephemerally and released after use, for example, a Real-time Transport Protocol (RTP) stream. A root termination is a special termination used to represent the entire MG. The associations between terminations are abstractly represented by contexts. A context may include multiple terminations. Thus, a topology is used to describe mutual relationships between the terminations. There is a special context called null context, which contains terminations that are not associated with any other termination.

Based on the above abstract connection model, interactions between the services and the bearers are actually operations on the terminations and the contexts. Such operations are performed through command requests and replies between the MGC and the MG. Command types include: Add, Modify, Subtract, Move, AuditValue, AuditCapabilities, Notify, and ServiceChange.Command. Parameters, also known as descriptors, are categorized into Property, Signal, Event, and Statistic. For better description, parameters with service relevance are aggregated into a package logically.

According to the definition in H.248, the MGC instructs the MG to perform a resource operation through a signal, for example, tone playing. Operations may be performed on the termination or stream according to the signal. If operations are executed on the termination according to the signal, the signal is applicable to all the streams on the termination. A signal list may be used to indicate a series of operations that need to be performed in sequence. There may be an interval between operations. The MGC carries the signal and/or the signal list in a signal descriptor, and sends the signal descriptor to the MG. The signal and/or the signal list in the signal descriptor sent at the same time is executed concurrently.

During the implementation of the present invention, the inventor discovers at least the following problems in the prior art:
On the same termination or stream, a signal descriptor that the MGC sends to the MG each time overwrites the previous signal descriptor. Thus, if a signal or a signal list in the previous signal descriptor needs to be reserved, signal descriptors that are sent subsequently must include the signal or the signal list. If a signal or a signal list is not included in a newly sent signal descriptor, the resource operation represented by the signal or the signal list is stopped. Even if the signal or the signal list is re-included in subsequent signal descriptors, the resource operation represented by the signal or the signal list can only be restarted from the beginning. Therefore, when a signal or a signal list in applications is paused rather than cancelled, the signal or the signal list cannot be resumed subsequently.

### Summary of the Invention

Embodiments of the present invention provide a method, system, and device for pausing signals to pause a signal or a signal list.

A method for pausing signals in an embodiment of the present invention includes:
receiving, by an MG, a pause instruction, from an MGC, instructing the MG to pause a resource operation; and
pausing, by the MG, the resource operation according to the pause instruction.

An MG provided in an embodiment of the present invention includes:
a transceiving unit, configured to receive a pause instruction, from an MGC, instructing the MG to pause a resource operation; and
an executing unit, configured to pause the resource operation according to the pause instruction.

An MGC provided in an embodiment of the present invention includes:
a generating unit, configured to generate a signal pause instruction; and
a transceiving unit, configured to: send the signal pause instruction to an MG, and receive an execution result about the signal pause operation from the MG.

Compared with the prior art, embodiments of the present invention have the following merits:
In embodiments of the present invention, the MGC may flexibly pause a signal or a signal list which is on a termination or a stream or is related to a media resource. When a signal or a signal list in applications is paused rather than cancelled, the signal or the signal list may be resumed subsequently.

### Brief Description of the Drawings

To make the technical solution under the present invention or in the prior art clearer, the accompanying drawings for illustrating the embodiments of the present invention or illustrating the prior art are outlined below. Evidently, the accompanying drawings are exemplary only, and those skilled in the art can derive other drawings from such accompanying drawings without creative work.
FIG. 1 illustrates the networking of an MGC and an MG in the prior art;
FIG. 2 is a flowchart of a method for pausing signals in an embodiment of the present invention; and
FIG. 3 shows a system for pausing signals in an embodiment of the present invention.

### Detailed Description of the Embodiments

The technical solution of the present invention is hereinafter described in detail with reference to the accompanying drawings. It is evident that the embodiments are only exemplary embodiments of the present invention and the present invention is not limited to such embodiments. Other embodiments that those skilled in the art derive based on embodiments of the present invention also fall within the scope of protection of the present invention.

Embodiments of the present invention provide a method, system and device for pausing signals so that a signal or a signal list is paused rather than cancelled, and then the signal or the signal list may be resumed subsequently.

The following describes the method and device for pausing signals in detail with reference to the accompanying drawings and exemplary embodiments.

A method for pausing signals is provided in an embodiment of the present invention. As shown in FIG. 2, the method includes the following steps:
Step s201: The MG receives a pause instruction, from an MGC, instructing the MG to pause a resource operation.
Step s202: The MG pauses the resource operation according to the pause instruction. In this embodiment, the pause instruction is represented by a signal. For example, the signal is named "pause". This signal may be defined in a prior package or a new package. For example, the new package is named "signal pause (SP) package". This signal may be applied on a termination or a stream on the termination. The process of controlling the pause operation by using the pause signal includes: carrying the pause signal in a signal descriptor sent to a termination or a stream to indicate that the pause operation needs to be executed on the termination or the stream; deleting the pause signal from a subsequent signal descriptor sent to the termination or the stream to indicate that the previously paused resource operation may be resumed on the termination or the stream.

The pause signal may further include one of the following parameters or any combination thereof:
a signal identifier (SI), indicating a signal that needs to be paused, which is a string in the format of package ID/signal ID;
a signal list identifier (SLI), indicating a signal list that needs to be paused, which is an integer; and
a media resource identifier (MRI), indicating a media resource associated with a signal and/or a signal list that needs to be paused.

The MRI is a string and may be in the format of uniform resource identifier (URI) or internationalized resource identifier (IRI). When a termination or a stream has multiple instances of the same type of signal and/or signal list, these instances may be differentiated by the MRI.

When the MGC needs to pause a resource operation, for example, resource transfer, the MGC sends the pause signal to the corresponding termination or stream on the MG. The MGC sends the pause signal to the MG through command requests such as Add, Modify, Move, and Subtract. The MG returns a command reply to the MGC after executing the pause operation.

The pause signal may include the identifier of the signal that need to be paused, identifiers of the signal list that need to be paused, and/or the identifier of the media resource that needs to be paused. The meanings of the combination are as follows: If the pause signal sent from the MGC does not include an identifier of a signal, a signal list or a media resource that needs to be paused, the MG pauses all the signals or signal lists on the termination or the stream. If the pause signal sent from the MGC includes an SI and/or a SLI that needs to be paused, the MG pauses the signal corresponding to the SI and/or the signal of an entire signal list corresponding to the SLI on the termination or stream. If the pause signal sent from the MGC includes only an MRI that needs to be paused, the MG pauses all the signals and/or signal lists associated with the media resource that corresponds to the MRI on the termination or stream. If the pause signal sent from the MGC includes an MRI that needs to be paused and an SI and/or a SLI that needs to be paused, the MG pauses the signal corresponding to the SI and/or the entire signal list corresponding to the SLI associated with the media resource that corresponds to the MRI on the termination or stream.

If the pause signal sent from the MGC includes the SI and/or the SLI, or the pause signal includes the termination or stream, or the pause signal includes the termination or stream and also includes the MRI, but the media resource does not match with any one of the following: the included SI and/or the SLI, the included termination or stream, the included termination or stream and the MRI. For example, if the signal or the signal list does not exist or is already executed, the MG returns an error reply to the MGC, e.g., an error code 473 (a prototype value indicating "conflict").

In addition, when the MGC sends the pause signal, the MGC should send the signal and/or the signal list corresponding to the pause signal to ensure that the signal and/or the signal list remains valid. In this way, the signal and/or the signal list may be resumed when necessary. Certainly, after the MG obtains the pause signal, the MG may automatically reserve the signal and/or the signal list while pausing the signal and/or the signal list corresponding to the pause signal. In this way, the signal and/or the signal list may also be resumed when necessary.

Further, when the MG pauses a signal and/or a signal list according to the pause signal sent from the MGC, the MG does not release the media resource associated with the signal and/or the signal list. At this time, the MGC may modify or even stop the paused signal or the signal list. If the signal or the signal list corresponding to the pause signal is modified or deleted, the pause signal is also modified or makes deletion accordingly to ensure the matching between the signal or the signal list and the pause signal.

In this embodiment, the pause instruction may be represented by a property in addition to the pause signal. For example, the property is named "pause". The pause property may be defined in a prior package or a new package. For example, the new package is named "signal pause (SP) package". The property type is enumeration. The property value is On or Off, which is readable and writable. When the value of the pause property is On, it indicates that the pause operation is executed, and when the value of the pause property is Off, it indicates that the pause operation is cancelled; or when the value of the pause property is Off, it indicates that the pause operation is executed, and when the value of the pause property is On, it indicates that the pause operation is cancelled. This property may be applied on a termination or a stream on the termination, and be carried in the TerminationState descriptor or the LocalControl descriptor, indicating that the pause operation is executed or cancelled for all the signals on the termination or the stream. The MGC may send this property to the MG to control the signal pause. The MGC may also audit this property on the MG to know the signal pause state.

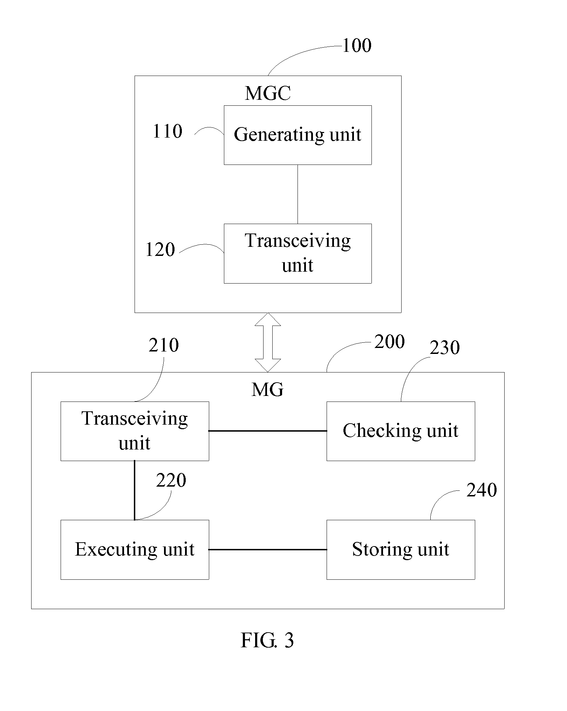

A system for pausing signals is also provided in an embodiment of the present invention. As shown in FIG. 3, the system includes:
an MGC 100, configured to send a signal pause instruction to an MG 200; and
the MG 200, configured to: receive the signal pause instruction from the MGC, and pause the signal and/or the signal list on the termination or stream according to the signal pause instruction.

The MG 200 includes:
a transceiving unit 210, configured to: receive a signal pause instruction from the MGC, and return the execution result about the signal pause operation to the MGC;
an executing unit 220, configured to pause the signal and/or the signal list on the termination or stream according to the pause instruction;
a checking unit 230, configured to: judge whether the SI and/or the SLI matches with the signal and/or the signal list on the termination, the stream, or the media resource; report an error indication to the MGC through the transceiving unit 210, if the SI and/or the SLI does not match with the signal and/or the signal list on the termination, the stream, or the media resource; and
a storing unit 240, configured to store the signal and/or the signal list paused by the executing unit.

The MGC 100 includes:
a generating unit 110, configured to generate a signal pause instruction; and
a transceiving unit 120, configured to: send the signal pause instruction to the MG, and receive the execution result about the signal pause operation from the MG.

In embodiments of the present invention, the MGC may flexibly pause a signal and/or a signal list on a termination or a stream or associated with a media resource.

Through the descriptions of the preceding embodiments, those skilled in the art may understand that the present invention may be implemented by hardware only or by software and a necessary universal hardware platform. Thus, the technical solution of the present invention may be made into software. The software may be stored in a non-volatile storage medium (for example, a CD-ROM, a USB disk, and a mobile hard disk), and include several commands that instruct a computer device (such as a personal computer, a server, or a network device) to execute the methods provided in each embodiment of the present invention.

Although the present invention has been described through several exemplary embodiments, the invention is not limited to such embodiments. It is apparent that those skilled in the art can make various modifications and variations to the invention without departing from the spirit and scope of the invention. The invention is intended to cover the modifications and variations provided that they fall within the scope of protection defined by the following claims or their equivalents.

## Claims

1. A method for pausing signals, comprising:
receiving, by a media gateway (MG), a pause instruction, from a media gateway controller (MGC), instructing the MG to pause a resource operation; and
pausing, by the MG, the resource operation according to the pause instruction.

2. The method of claim 1, wherein the pause instruction is represented by a signal and/or a signal list.

3. The method of claim 2, further comprising:
receiving, by the MG, the signal and/or signal list corresponding to the pause instruction sent from the MGC, so that the paused media operation remains valid; or
reserving, by the MG, the signal and/or signal list corresponding to the pause instruction according to earlier settings while pausing the resource operation, so that the paused media operation remains valid.

4. The method of claim 2, wherein after the MG pauses the signal and/or the signal list on a termination or a stream according to the signal pause instruction, the method further comprises:
receiving, by the MG, an instruction, sent from the MGC, for modifying or stopping the paused signal and/or signal list; and
modifying or stopping, by the MG, the paused signal and/or signal list according to the instruction.

5. The method of claim 2, wherein the signal pause instruction is represented by a signal and/or a signal list and the MG pauses the signal and/or signal list on a termination or a stream according to the signal pause instruction sent from the MGC.

6. The method of claim 5, wherein the step of pausing the signal and/or the signal list on the termination or the stream by the MG according to the signal pause instruction sent from the MGC comprises:
when the pause signal is added to a signal descriptor, pausing, by the MG, the signal and/or signal list on the termination or the stream;
when the pause signal is deleted from a subsequent signal descriptor, canceling, by the MG, the pause operation on the signal and/or signal list on the termination or the stream.

7. The method of claim 3 or 4, wherein the signal comprises one of the following: a signal identifier (SI), a signal list identifier (SLI), and a media resource identifier (MRI), or any combination thereof, wherein:
the MG pauses a signal corresponding to the SI;
the MG pauses a signal list corresponding to the SLI; and
the MG pauses a signal and/or a signal list associated with a media resource that corresponds to the MRI on the termination or the stream.

8. The method of claim 7, further comprising:
if the pause signal sent from the MGC does not comprise an identifier of a signal, a signal list or a media resource that needs to be paused, pausing, by the MG, all the signals or signal lists on the termination or the stream;
if the pause signal sent from the MGC comprises an identifier of a signal and/or a signal list that needs to be paused, pausing, by the MG, the signal corresponding to the SI and/or the entire signal list corresponding to the SLI on the termination or the stream;
if the pause signal sent from the MGC comprises only an identifier of a media resource that needs to be paused, pausing, by the MG, all the signals and/or signal lists associated with the media resource that corresponds to the MRI on the termination or the stream; and
if the pause signal sent from the MGC comprises an identifier of a media resource that needs to be paused and an identifier of a signal and/or a signal list that needs to be paused, pausing, by the MG, the signal corresponding to the SI and/or the entire signal list corresponding to the SLI associated with the media resource that corresponds to the MRI on the termination or the stream.

9. The method of claim 7, wherein before the MG pauses the signal and/or the signal list on the termination or the stream according to the pause signal sent from the MGC, the method further comprises:
judging whether the SI and/or the SLI matches with the signal and/or the signal list on the termination, stream, or media resource; and reporting, by the MG, an error indication to the MGC, if the SI and/or the SLI does not match with the signal and/or the signal list on the termination.

10. The method of claim 2, wherein the signal pause instruction is represented by a property and the MG pauses the signal and/or signal list on a termination or a stream according to the property sent from the MGC.

11. The method of claim 10, wherein the step of pausing the signal and/or the signal list on the termination or the stream by the MG according to the property sent from the MGC comprises:
when the value of the property is On, pausing, by the MG, the signal and/or the signal list on the termination or the stream; when the value of the property is Off, canceling, by the MG, the pause operation on the signal and/or the signal list on the termination or the stream; or
when the value of the property is Off, pausing, by the MG, the signal and/or the signal list on the termination or the stream; when the value of the property is On, canceling, by the MG, the pause operation on the signal and/or the signal list on the termination or the stream.

12. A media gateway (MG), comprising:
a transceiving unit, configured to receive a pause instruction, from a media gateway controller (MGC), instructing the MG to pause a resource operation; and
an executing unit, configured to pause the resource operation according to the pause instruction.

13. The MG of claim 12, further comprising:
a checking unit, configured to: judge whether a signal identifier (SI) and/or a signal list identifier (SLI) matches with a signal and/or a signal list on a termination, a stream or a media resource; and reporting, by the MG, an error indication to the MGC through the transceiving unit, if the signal identifier (SI) and/or a signal list identifier (SLI) does not match with the signal and/or a signal list on a termination, a stream or a media resource.

14. The MG of claim 12, further comprising:
a storing unit, configured to reserve the signal and/or the signal list paused by the executing unit.

15. A media gateway controller (MGC), comprising:
a generating unit, configured to generate a signal pause instruction; and
a transceiving unit, configured to: send the signal pause instruction to a media gateway (MG), and receive an execution result about the signal pause operation from the MG.
